# EUROPEAN PATENT APPLICATION

(11) **EP 4 530 131 A1**
(43) Date of publication of application: **02.04.2025**
(21) Application number: 23906020.5
(22) Date of filing: 20.12.2023
(51) Int. Cl.: B60R 13/00

(54) **VEHICLE EMBLEM RAISING AND RETRACTING DEVICE, AND VEHICLE**

(30) Priority: 20.12.2022 CN 202211644004
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CAI, Xinhang, Ningbo, Zhejiang 315899 (CN); CAO, Huosen, Ningbo, Zhejiang 315899 (CN); LIU, Zhiyong, Ningbo, Zhejiang 315899 (CN); LI, Guolin, Ningbo, Zhejiang 315899 (CN); JIANG, Kun, Ningbo, Zhejiang 315899 (CN); ZHAO, Weigang, Ningbo, Zhejiang 315899 (CN); LV, Hailin, Ningbo, Zhejiang 315899 (CN); JIA, Huilin, Ningbo, Zhejiang 315899 (CN); CHEN, Hongqiang, Ningbo, Zhejiang 315899 (CN); XU, Yun, Ningbo, Zhejiang 315899 (CN)
(74) Representative: Dai, Simin
(86) International application number: PCT/CN2023/140330
(87) International publication number: WO 2024/131859

(57) **Abstract**

Provided in the present disclosure are a vehicle emblem raising and retracting device, and a vehicle. The vehicle emblem raising and retracting device includes a driving mechanism, a clutch mechanism and a linkage rod mechanism. The driving mechanism is assembled in the vehicle body of the vehicle. The clutch mechanism is assembled below a three-dimensional vehicle emblem and is selectively connected to the driving mechanism; when the clutch mechanism is engaged with the driving mechanism, the driving mechanism drives the clutch mechanism to cause the three-dimensional vehicle emblem to move up and down relative to the vehicle body; when the clutch mechanism is disengaged from the driving mechanism, the clutch mechanism and the three-dimensional vehicle emblem descend to the inside of the vehicle body under effect of their own gravity. The linkage rod mechanism is assembled below a flat vehicle emblem, is located at one side of the clutch mechanism and abuts against the clutch mechanism; for the duration of disengagement from the driving mechanism, while descending, the clutch mechanism guides the linkage rod mechanism to bring the flat vehicle emblem to move upwards relative to the vehicle body to make the flat vehicle emblem above the three-dimensional vehicle emblem without extending beyond the top surface of the vehicle body.

## Description

### TECHNICAL FIELD

The present disclosure relates to the field of vehicle technologies and in particular to a vehicle emblem raising and retracting device, and a vehicle.

### BACKGROUND

Along with the rapid development of the vehicle industry and continuous innovation of vehicle manufacturing technologies, people have gradually increased requirements for the functions of vehicles. Vehicle emblems are emblems of various vehicle brands which are mainly used for vehicle identification. These emblems have become the representatives of the vehicle manufacturers. In the related arts, the three-dimensional vehicle emblem is usually protruded from the vehicle body of the vehicle, making itself easily collided by pedestrians or broken off by people. When the three-dimensional vehicle emblem is collided or intentionally moved by people, the three-dimensional vehicle emblem will be damaged, lowering the vehicle emblem identification and leading to poor aesthetics.

### SUMMARY

In view of this, one of the objects of the present disclosure is to provide a vehicle emblem raising and retracting device, and a vehicle to solve at least some problems of the related arts.

The present disclosure provides a vehicle emblem raising and retracting device, including:
a driving mechanism, assembled in a vehicle body of a vehicle;
a clutch mechanism, assembled below a three-dimensional vehicle emblem and selectively connected with the driving mechanism; where, when the clutch mechanism is engaged with the driving mechanism, the driving mechanism drives the clutch mechanism to bring the three-dimensional vehicle emblem to move up and down relative to the vehicle body; when the clutch mechanism is disengaged from the driving mechanism, the clutch mechanism and the three-dimensional vehicle emblem move down under gravities of the clutch mechanism and the three-dimensional vehicle emblem and located inside the vehicle body; and
a linkage rod mechanism, assembled below a flat vehicle emblem and located at a side of the clutch mechanism and abutted against the clutch mechanism; where, when the clutch mechanism is disengaged from the driving mechanism, the clutch mechanism, during descent, guides the linkage rod mechanism to bring the flat vehicle emblem to move up relative to the vehicle body, to make the flat vehicle emblem above the three-dimensional vehicle emblem without extending beyond a top surface of the vehicle body.

In some embodiments, the vehicle emblem raising and retracting device further includes a mounting seat, the three-dimensional vehicle emblem is assembled on a top of the mounting seat, and the clutch mechanism is at least partially disposed on the mounting seat; the linkage rod mechanism and the flat vehicle emblem are at a side of the mounting seat, and a guiding structure is provided at a side of the mounting seat close to the linkage rod mechanism; when the clutch mechanism is engaged with the driving mechanism, an end of the linkage rod mechanism is abutted against a sidewall of the mounting seat; when the clutch mechanism is disengaged from the driving mechanism and the clutch mechanism moves down, the mounting seat, through the guiding structure, guides the linkage rod mechanism to move to bring the flat vehicle emblem to move up relative to the vehicle body of the vehicle and is snapped to the linkage rod mechanism through the guiding structure.

In some embodiments, the vehicle emblem raising and retracting device further includes a housing; the linkage rod mechanism includes an abutting linkage rod, a transmission linkage rod and a support linkage rod; where one end of the abutting linkage rod is abutted against a side of the mounting seat, another end of the abutting linkage rod is connected with one end of the transmission linkage rod, another end of the transmission linkage rod is connected with one end of the support linkage rod, and another end of the support linkage rod is connected with the flat vehicle emblem; when the clutch mechanism moves down, the mounting seat, through the guiding structure, guides the abutting linkage rod to move to bring the transmission linkage rod to move, so as to bring the support linkage rod to support the flat vehicle emblem to move up relative to the vehicle body of the vehicle.

In some embodiments, the abutting linkage rod includes an abutting end, a first connection end and a second connection end; where the abutting end is abutted against a side of the mounting seat, the first connection end is movably connected with an inner wall of the housing, and the second connection end is movably connected with an end of the transmission linkage rod; the abutting end, the first connection end and the second connection end form a triangle; in a vertical direction, the abutting end is between the first connection end and the second connection end, and the first connection end is below the abutting end; in a horizontal direction, the abutting end is closer to the mounting seat than the first connection end and the second connection end.

In some embodiments, the linkage rod mechanism further includes at least one movable linkage rod, the support linkage rod includes a supporting point, some movable linkage rods of the at least one movable linkage rod are connected between the support point and the inner wall of the housing, and other movable linkage rods of the at least one movable linkage rod are connected between a bottom of the support linkage rod and the inner wall of the housing.

In some embodiments, the transmission linkage rod is connected between the second connection end and the support point; when the support linkage rod supports the flat vehicle emblem to be above the three-dimensional vehicle emblem, the support point, the first connection end and the second connection end are on a same line.

In some embodiments, there is at least one support point; the at least one support point is disposed offset from a middle region of the support linkage rod and close to the bottom of the support linkage rod.

In some embodiments, when the clutch mechanism is engaged with the driving mechanism, the bottom of the support linkage rod extends to below at least one transmission linkage rod, and the transmission linkage rod and the at least one movable linkage rod are folded and accommodated at a side of the support linkage rod away from the mounting seat.

In some embodiments, when the clutch mechanism is disengaged from the driving mechanism, the first connection end, the second connection end and a connection point between one of the at least one movable linkage rod and the housing form a triangle.

In some embodiments, the linkage rod mechanism further includes a slide wheel on the abutting end; the guiding structure includes a vertical guiding groove and a horizontal guiding groove in communication with the vertical guiding groove, the horizontal guiding groove is above the vertical guiding groove and extends horizontally, and the vertical guiding groove extends vertically; when the clutch mechanism moves down, the abutting end slides from the vertical guiding groove to the horizontal guiding groove via the slide wheel and is snapped to the horizontal guiding groove.

In some embodiments, the vehicle emblem raising and retracting device further includes a slide rail on the vehicle body; where the clutch mechanism includes a slide block and a pin, where the slide block is slidably disposed on the slide rail, the pin is slidably inserted in the slide block, the driving mechanism is connected with the slide block, the pin is movably disposed on the mounting seat, and an end of the pin away from the slide block is connected with the three-dimensional vehicle emblem.

In some embodiments, the pin includes a first end and second end that are opposite to each other, the slide block includes a position limiting groove, the second end is connected with the three-dimensional vehicle emblem via the clutch mechanism, and the first end protrudes into the position limiting groove to enable the slide block to bring, through the pin, the clutch mechanism to move up and down , and to bring the three-dimensional vehicle emblem to move up and down.

In some embodiments, the clutch mechanism further includes an upper swing rod, a rocking rod and a lower swing rod sequentially connected from top down; where the rocking rod is rotatably fixed on the mounting seat through a fixing shaft, and both ends of the rocking rod are respectively connected with the upper swing rod and the lower swing rod; an end of the upper swing rod away from the rocking rod is connected with the three-dimensional vehicle emblem, and an end of the lower swing rod away from the rocking rod is connected with the pin.

In some embodiments, the clutch mechanism further includes a first elastic member and a transmission base; the three-dimensional vehicle emblem is on a top of the transmission base, and both ends of the first elastic member are respectively connected with the transmission base and the upper swing rod.

In some embodiments, the clutch mechanism further includes a first elastic member and a transmission base; a bottom of the transmission base is further provided with a linkage rod, and the first elastic member is inserted in the linkage rod.

In some embodiments, the clutch mechanism further includes a linkage seat on the mounting seat, a through hole is formed in the linkage seat, the linkage rod is inserted in the through hole and slidable relative to the linkage seat, both ends of the first elastic member are respectively connected with the transmission base and the mounting seat, and the linkage rod is hinged to an end of the upper swing rod away from the rocking rod.

In some embodiments, the vehicle emblem raising and retracting device further includes a second elastic member, and the second elastic member is in a tensioned state and respectively connected with the mounting seat and the vehicle body of the vehicle.

The present disclosure further provides a vehicle, including the vehicle emblem raising and retracting device mentioned in any one of the above embodiments.

In the vehicle emblem raising and retracting device, and the vehicle provided by the embodiments of the present disclosure, the vehicle emblem raising and retracting device is provided with the driving mechanism, the clutch mechanism and the linkage rod mechanism, the three-dimensional vehicle emblem is assembled by using the clutch mechanism, and the flat vehicle emblem is assembled by using the linkage rod mechanism; the clutch mechanism is below the three-dimensional vehicle emblem and selectively connected with the driving mechanism; when the clutch mechanism is engaged with the driving mechanism, the driving mechanism drives the clutch mechanism to bring the three-dimensional vehicle emblem to move up and down relative to the vehicle body; when the clutch mechanism is disengaged from the driving mechanism, the clutch mechanism and the three-dimensional vehicle emblem move down into the vehicle body under the effect of their gravity; meanwhile, the clutch mechanism, during its descent, guides the linkage rod mechanism to bring the flat vehicle emblem to move up relative to the vehicle body, to make the flat vehicle emblem above the three-dimensional vehicle emblem without extending beyond the top surface of the vehicle body. Therefore, under a normal state, the clutch mechanism is connected with the three-dimensional vehicle emblem and the driving mechanism, and the vehicle emblem raising and retracting device can control, through the driving mechanism, the three-dimensional vehicle emblem to move up and remain unchanged at one position; when the three-dimensional vehicle emblem needs to move down normally, the driving mechanism also can lower and retract the three-dimensional vehicle emblem into the vehicle body by the clutch mechanism. When the three-dimensional vehicle emblem is collided by pedestrian or moved by external force, the clutch mechanism can directly disconnect the three-dimensional vehicle emblem with the driving mechanism, such that the three-dimensional vehicle emblem can quickly move down under the effect of its gravity. The descending speed of the descending mode under the effect of gravity of the three-dimensional vehicle emblem is faster than that of the descending mode under the drive of the driving mechanism, effectively protecting the three-dimensional vehicle emblem. After the three-dimensional vehicle emblem moves down, the linkage rod mechanism brings the flat vehicle emblem to move above the three-dimensional vehicle emblem, thereby displaying the flat vehicle emblem and hence maintaining the vehicle emblem identification. Furthermore, the three-dimensional vehicle emblem can be protected by the flat vehicle emblem, and a through hole for inserting the three-dimensional vehicle emblem on the vehicle body can be covered by the flat vehicle emblem, making the surface of the vehicle body beautiful and improving the user experience.

### BRIEF DESCRIPTION OF THE DRAWINGS

To describe the technical solutions in the embodiments of the present disclosure more clearly, drawings required in descriptions of the embodiments of the present disclosure will be briefly introduced below. It is apparent that the drawings described below are merely embodiments of the present disclosure and other drawings can be obtained by those of ordinary skill in the prior arts based on these drawings without carrying out creative work.
FIG. 1 is a structural schematic diagram illustrating a vehicle emblem raising and retracting device in a raised state according to an embodiment of the present disclosure.
FIG. 2 is a structural schematic diagram illustrating the vehicle emblem raising and retracting device of FIG. 1 in a lowered state.
FIG. 3 is a schematic diagram illustrating a partial structure of the vehicle emblem raising and retracting device of FIG. 1.
FIG. 4 is a structural schematic diagram illustrating an another embodiment of the vehicle emblem raising and retracting device of FIG. 1 in a raised state.
FIG. 5 is a schematic diagram illustrating a partial structure of the vehicle emblem raising and retracting device of FIG. 4.
FIG. 6 is a rear-view schematic diagram illustrating the vehicle emblem raising and retracting device of FIG. 5.
FIG. 7 is a schematic diagram illustrating a partial structure of the vehicle emblem raising and retracting device of FIG. 4.
FIG. 8 is a structural schematic diagram illustrating an another embodiment of the vehicle emblem raising and retracting device of FIG. 1 in a lowered state.
FIG. 9 is a schematic diagram illustrating a partial structure of the vehicle emblem raising and retracting device of FIG. 8.
FIG. 10 is a rear-view schematic diagram illustrating the vehicle emblem raising and retracting device of FIG. 9.
FIG. 11 is a structural schematic diagram illustrating a vehicle according to an embodiment of the present disclosure.

Reference numerals:
100, vehicle emblem raising and retracting device; 11, three-dimensional vehicle emblem; 12, flat vehicle emblem; 102, raising and retracting assembly; 103, guiding assembly; 104, transmission assembly; 105, driving assembly; 106, transmission wheel assembly; 1061, first transmission wheel; 1062, second transmission wheel; 107, flexible connection member; 108, first guiding plate; 109, guideway; 110, second guiding plate; 111, guiding hole; 112, vehicle emblem linkage rod; 113, first slide portion; 114, second slide portion; 115, elastic assembly; 116, safety switch; 117, controller; 118, elastic member; 119, base; 120, casting head member; 20, driving mechanism; 30, clutch mechanism; 31, slide block; 311, position limiting groove; 32, pin; 321, first end; 322, second end; 33, upper swing rod; 34, rocking rod; 341, fixing shaft; 35, lower swing rod; 37, transmission base; 371, linkage rod; 38, linkage seat; 40, mounting seat; 401, guiding structure; 402, vertical guiding groove; 403, horizontal guiding groove; 50, slide rail; 60, second elastic member; 70, linkage rod mechanism; 701, abutting linkage rod; 702, transmission linkage rod; 703, support linkage rod; 704, abutting end; 705, first connection end; 706, second connection end; 707, movable linkage rod; 708, support point; 709, slide wheel; 80, housing; 200, vehicle.

### DETAILED DESCRIPTION

The technical solutions of the embodiments of the present disclosure will be fully and clearly described below in combination with the accompanying drawings in the embodiments of the present disclosure. Apparently, the embodiments described herein are merely some embodiments of the present disclosure rather than all embodiments. All other embodiments obtained by those skilled in the art based on these embodiments in the present disclosure without carrying out creative work shall fall within the scope of protection of the present disclosure.

The present disclosure provides a vehicle emblem raising and retracting device, and a vehicle. The vehicle emblem raising and retracting device includes a driving mechanism, a clutch mechanism and a linkage rod mechanism. The driving mechanism is assembled to a vehicle body of the vehicle. The clutch mechanism is assembled below a three-dimensional vehicle emblem and selectively connected with the driving mechanism. When the clutch mechanism is engaged with the driving mechanism, the driving mechanism drives the clutch mechanism to bring the three-dimensional vehicle emblem to move up and down relative to the vehicle body; when the clutch mechanism is disengaged from the driving mechanism, the clutch mechanism and the three-dimensional vehicle emblem move down into the vehicle body under the effect of their gravity. The linkage rod mechanism is assembled below a flat vehicle emblem, located at a side of the clutch mechanism and abutted against the clutch mechanism; when the clutch mechanism is disengaged from the driving mechanism, the clutch mechanism, during its descent, guides the linkage rod mechanism to bring the flat vehicle emblem to move up relative to the vehicle body, to make the flat vehicle emblem above the three-dimensional vehicle emblem without extending beyond the top surface of the vehicle body.

In the vehicle emblem raising and retracting device, and the vehicle provided by the embodiments of the present disclosure, the vehicle emblem raising and retracting device is provided with the driving mechanism, the clutch mechanism and the linkage rod mechanism, and the three-dimensional vehicle emblem is assembled by using the clutch mechanism, and the flat vehicle emblem is assembled by using the linkage rod mechanism; the clutch mechanism is disposed below the three-dimensional vehicle emblem and selectively connected with the driving mechanism; when the clutch mechanism is engaged with the driving mechanism, the driving mechanism drives the clutch mechanism to bring the three-dimensional vehicle emblem to move up and down relative to the vehicle body; when the clutch mechanism is disengaged from the driving mechanism, the clutch mechanism and the three-dimensional vehicle emblem move down into the vehicle body under the effect of their gravity; meanwhile, the clutch mechanism, during its descent, guides the linkage rod mechanism to bring the flat vehicle emblem to move up relative to the vehicle body, to make the flat vehicle emblem above the three-dimensional vehicle emblem without extending beyond the top surface of the vehicle body. Therefore, under a normal state, the clutch mechanism is connected with the three-dimensional vehicle emblem and the driving mechanism, and the vehicle emblem raising and retracting device can control, through the driving mechanism, the three-dimensional vehicle emblem to move up and remain unchanged at one position; when the three-dimensional vehicle emblem needs to move down normally, the driving mechanism also can lower and retract the three-dimensional vehicle emblem into the vehicle body by the clutch mechanism. When the three-dimensional vehicle emblem is collided by a pedestrian or is moved by an external force, the clutch mechanism can directly disconnect the three-dimensional vehicle emblem from the driving mechanism, such that the three-dimensional vehicle emblem can quickly move down under the effect of its gravity. The descending speed of the descending mode under the effect of gravity of the three-dimensional vehicle emblem is faster than that of the descending mode under the drive of the driving mechanism, effectively protecting the three-dimensional vehicle emblem. After the three-dimensional vehicle emblem moves down, the linkage rod mechanism brings the flat vehicle emblem to move above the three-dimensional vehicle emblem, thereby displaying the flat vehicle emblem and hence maintaining the vehicle emblem identification. Furthermore, the three-dimensional vehicle emblem can be protected by the flat vehicle emblem, and a through hole for inserting the three-dimensional vehicle emblem on the vehicle body can be covered by the flat vehicle emblem, making the surface of the vehicle body beautiful and improving the user experience.

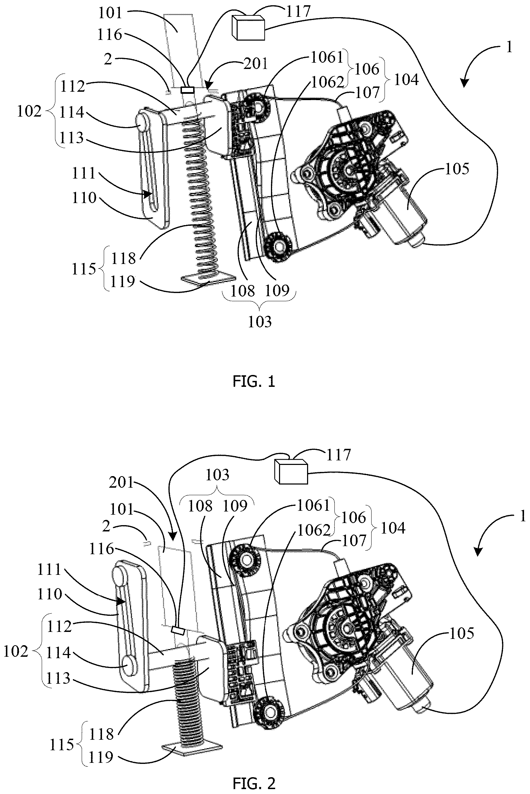

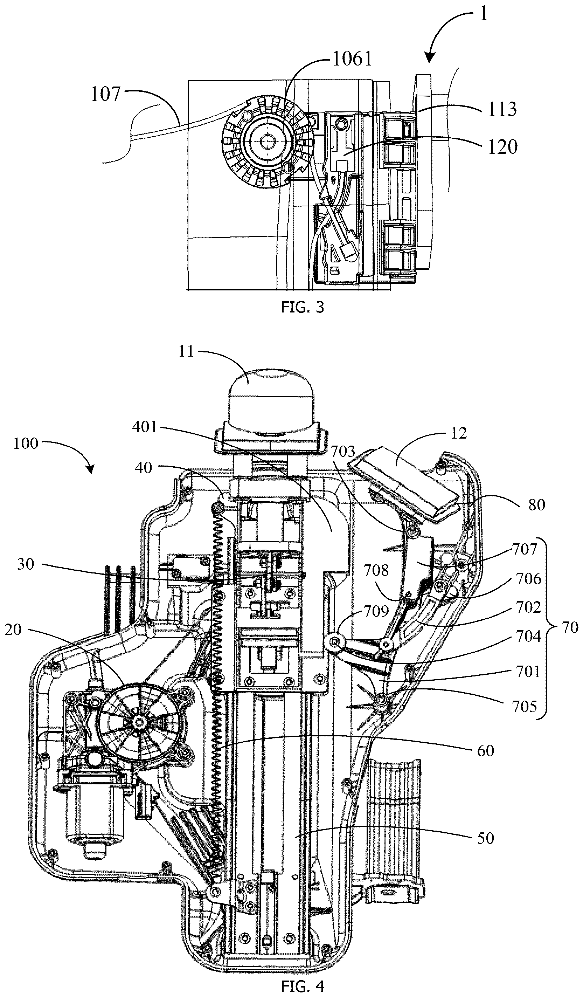

FIG. 1 is a structural schematic diagram illustrating a vehicle emblem raising and retracting device 100 according to an embodiment of the present disclosure. FIG. 2 is a structural schematic diagram illustrating the vehicle emblem raising and retracting device 100 of FIG. 1. FIG. 3 is a partial structural schematic diagram illustrating the vehicle emblem raising and retracting device 100 of FIG. 1. The vehicle emblem raising and retracting device 100 is applied in a vehicle 200 and configured to move up and down a vehicle emblem 101. The vehicle emblem 101 may be a three-dimensional vehicle emblem or a flat vehicle emblem. As shown in FIG. 1 to FIG. 2, the vehicle emblem raising and retracting device 100 includes a raising and retracting assembly 102, a guiding assembly 103, a transmission assembly 104, and a driving assembly 105. In this embodiment, the raising and retracting assembly 102 is configured to assemble the vehicle emblem 101, which is a three-dimensional vehicle emblem. The raising and retracting assembly 102 is movably assembled to the guiding assembly 103 to move up and down relative to the guiding assembly 103. The guiding assembly 103 can guide the raising and retracting assembly 102 to bring the vehicle emblem 101 to move up and down. The transmission assembly 104 includes a transmission wheel assembly 106 and a flexible connection member sleeved on the transmission wheel assembly 106. The transmission wheel assembly 106 is assembled to the guiding assembly 103, and the flexible connection member 107 is connected with the raising and retracting assembly 102. The guiding assembly 103 achieves the effect of fixing the transmission wheel assembly 106. The flexible connection member 107 brings the raising and retracting assembly 102 to move up and down under the constraint or support effect of the transmission wheel assembly 106. The driving assembly 105 is connected with the flexible connection member 107. The driving assembly 105 drives, by the flexible connection member 107, the transmission wheel assembly 106 to rotate to bring the raising and retracting assembly 102 to move up and down relative to the guiding assembly 103, so as to bring the vehicle emblem 101 to move up and down. The driving assembly 105 provides a driving force, and the driving force is transmitted to the raising and retracting assembly 102 through the flexible connection member 107 to realize the lifting and lowering of the raising and retracting assembly 102, thereby enabling the raising and retracting assembly 102 to bring the vehicle emblem 101 to move up and down. In a moving-up and down process, the guiding assembly 103 can guide the raising and retracting assembly 102 to move up and down relative to the guiding assembly 103. In a transmission process, the flexible connection member 107 is sleeved on the transmission wheel assembly 106, the transmission wheel assembly 106 can render constraint or supporting effect to the flexible connection member 107, such that the flexible connection member 107 can stably drive the raising and retracting assembly 102 to move up and down, achieving reliability and stability.

In this embodiment, the driving assembly 105 is a drive motor, and the flexible connection member 107 is a flexible pull cable. The drive motor is connected with the raising and retracting assembly 102 via the flexible pull cable, and transmits the driving force via the flexible pull cable, such that the driving force transmitted to the raising and retracting assembly 102 is more stably, achieving ascent and descent at constant speed. The flexible pull cable features strong boundary adaptability, small size, and small volume, and hence occupies small space and saves arrangement space. Therefore, the entire vehicle emblem raising and retracting device 100 has a smaller size and volume, occupying smaller space and saving arrangement space. By providing the flexible connection member, the position of the driving assembly 105 can be arranged flexibly. The driving assembly 105 does not need to be arranged close to the position of the transmission assembly 104 to achieve transmission. The position of the driving assembly 105 can be arranged based on actual arrangement space with small arrangement space constraints and strong adaptability.

In the embodiments shown in FIG. 1 to FIG. 2, the guiding assembly 103 includes a first guiding plate 108 extending up and down, and a guideway 109 extending up and down is on the first guiding plate 108. The raising and retracting assembly 102 is movably assembled to the guideway 109. The transmission wheel assembly 106 is assembled to the first guiding plate 108. The driving assembly 105 drives, through the flexible connection member 107, the transmission wheel assembly 106 to rotate to bring the raising and retracting assembly 102 to move up and down along the guideway 109. In this embodiment, the up-down extending direction of the first guiding plate 108 and the guideway 109 refers to a vertical extending direction. The raising and retracting assembly 102 and the driving assembly 105 are, respectively, at both sides of the first guiding plate 108. The guideway 109 is at a side of the first guiding plate 108 close to the raising and retracting assembly 102, which facilitates the assembly of the raising and retracting assembly 102 to the guideway 109 and facilitates upward and downward movement of the raising and retracting assembly 102 along the guideway 109. The transmission wheel assembly 106 is assembled at a side of the first guiding plate 108 close to the flexible connection member 107 and the driving assembly 105, such that it is convenient for the flexible connection member 107 to be sleeved on the transmission wheel assembly 106 and respectively connected with the raising and retracting assembly 102 and the driving assembly 105. On the one hand, the first guiding plate 108 is provided with the guideway 109 to guide the raising and retracting assembly 102 and ensure that the raising and retracting assembly 102 moves up and down along the guideway 109, and on the other hand, the first guiding plate 108 achieves the effect of fixing the transmission wheel assembly 106 to facilitate the flexible connection member 107 to be connected with the raising and retracting assembly 102 and the driving assembly 105. In this way, the entire vehicle emblem raising and retracting device 100 can have a more compact structure and smaller volume, occupying smaller space.

In the embodiments shown in FIG. 1 to FIG. 2, the transmission wheel assembly 106 includes a first transmission wheel 1061 and a second transmission wheel 1062; the first transmission wheel 1061 and the second transmission wheel 1062 are respectively fixed to upper and lower ends of the first guiding plate 108, and the flexible connection member 107 is sleeved on the first transmission wheel 1061 and the second transmission wheel 1062. The first transmission wheel 1061 and the second transmission wheel 1062 are close to the guideway 109, and at a side of the guideway 109, whereas the raising and retracting assembly 102 is at the other side of the guideway 109. Thus, under the support of the first transmission wheel 1061 and the second transmission wheel 1062, it is convenient for the flexible connection member 107 to be connected with the raising and retracting assembly 102. The first transmission wheel 1061 and the second transmission wheel 1062 are fixed at the upper and lower ends of the first guiding plate 108, respectively to limit and restrict a height position of the flexible connection member 107, so as to limit a raising position and a retracting position of the raising and retracting assembly 102. The user may, based on the size of the vehicle emblem 101, design positions of the first transmission wheel 1061 and the second transmission wheel 1062 to limit the raising position and the retracting position of the raising and retracting assembly 102, so as to limit a raising position and a retracting position of the vehicle emblem 101, increasing the adaptability.

In the embodiments shown in FIG. 1 to FIG. 2, the guiding assembly 103 includes a second guiding plate 110 extending up and down, and the second guiding plate 110 is provided with a guiding hole 111 extending up and down. The second guiding plate 110 and the first guiding plate 108 are oppositely arranged in a distance along a horizontal direction. Along the horizontal direction, the raising and retracting assembly 102 is connected between the first guiding plate 108 and the second guiding plate 110. Under the joint action of the first guiding plate 108 and the second guiding plate 110, the raising and retracting assembly 102 is moved up and down to bring (drive) the vehicle emblem 101 to move up and down.

In the embodiments shown in FIG. 1 to FIG. 3, the raising and retracting assembly 102 includes a vehicle emblem linkage rod 112, a first slide portion 113, and a second slide portion 114, where the first slide portion 113 and the second slide portion 114 are at both ends of the vehicle emblem linkage rod 112. The vehicle emblem linkage rod 112 is configured to assemble the vehicle emblem 101. The vehicle emblem linkage rod 112 extends along a direction perpendicular to the up-down moving direction of the vehicle emblem 101. The first slide portion 113 is on the guideway 109 and connected with the flexible connection member 107. The second slide portion 114 is in the guiding hole 111. The driving assembly 105 drives, through the flexible connection member 107, the transmission wheel assembly 106 to rotate to bring the first slide portion 113 to move up and down along the guideway 109 and bring the second slide portion 114 to move up and down along the guiding hole 111, so as to enable the vehicle emblem linkage rod 112 to bring the vehicle emblem 101 to move up and down. Under the guiding effect of the guideway 109 for the first slide portion 113, and the guiding effect of the guiding hole 111 for the second slide portion 114, the vehicle emblem linkage rod 112 is moved up and down to bring the vehicle emblem 101 to move up and down.

In this embodiment, the first slide portion 113 may be a slide groove plate at a side of the first guiding plate 108 away from the driving assembly 105 and connected with the guideway 109. The second slide portion 114 may be a position limiting protrusion block inserted in the guiding hole 111, extended beyond a side surface of the second guiding plate 110 away from the first guiding plate 108, and cooperated with the guiding hole 111 for position limiting. When the vehicle emblem linkage rod 112 drives the vehicle emblem 101 to move up and down, the vehicle emblem linkage rod 112 moves up and down along the guideway 109, and under the action of the guiding motion trajectory of the guiding hole 111, achieving the moving up and down of the vehicle emblem 101. Because the structures, such as the grille lamp and front bumper mounting frame, and the like, are usually arranged below the vehicle emblem 101, the moving trajectory of the vehicle emblem linkage rod 112 can be changed by guiding the second slide portion 114 with the guiding hole 111, so as to bypass the grille lamp and the front bumper mounting frame and the like, solving the problem of bypassing the structures such as grille lamp and the front bumper mounting frame and the like below the vehicle emblem 101, and providing convenience for shape design and boundary environment of the vehicle emblem 101. In the embodiment shown in FIG. 3, the flexible connection member 107 is connected with the slide groove plate via a casting head member 120, achieving a stable fixing effect.

In the embodiments shown in FIG. 1 and FIG. 2, the guiding hole 111 is an elongated hole having an included angle with the vertical direction. With this arrangement, the guiding hole 111 can guide the vehicle emblem linkage rod 112 to realize a non-normal raising and retracting trajectory. The non-normal raising and retracting trajectory has an included angle with the vertical direction. In this way, the problem of bypassing the structures, such as the grille lamp and the front bumper mounting frame, and the like, below the vehicle emblem 101 can be solved, providing convenience for shape design and boundary environment of the vehicle emblem 101.

In some other embodiments, the guiding hole 111 is an arc-shaped hole. For example, the arc-shaped hole has a section of S shape or other shapes, which is not limited herein. In this way, the curved raising and retracting trajectory of the vehicle emblem linkage rod 112 can be realized, avoiding or bypassing the structures, such as the grille lamp and the front bumper mounting frame, and the like, and providing convenience for shape design and boundary environment of the vehicle emblem 101.

In the embodiment, the vehicle emblem 101 is at the front end of the vehicle, which is a key pedestrian protection region. Due to the sharp structure of the vehicle emblem 101, the vehicle emblem 101 needs to move down quickly upon collision to below a molded surface of the front end of the vehicle, so as to protect the pedestrians. When the vehicle emblem 101 of the vehicle is collided, and hence a pedestrian protection mode is to be enabled, or when the vehicle emblem 101 of the vehicle is pulled by people, the vehicle emblem raising and retracting device 100 switches from a constant-speed raising and retracting mode to a quick descent mode. In the embodiment, the vehicle emblem raising and retracting device 100 further includes an elastic assembly 115 connected with the raising and retracting assembly 102. The elastic assembly 115 as a quick descent assembly provides power for the vehicle emblem 101 to quickly move down, realizing quick descent of the vehicle emblem 101.

In the embodiments shown in FIG. 1 to FIG, 2, the vehicle emblem raising and retracting device 100 further includes a safety switch 116 and a controller 117 connected with the safety switch 116 and the driving assembly 105. The safety switch is on the vehicle emblem 101 and connected with the driving assembly 105. In some embodiments, the safety switch 116 is on the top or bottom of the vehicle emblem 101. In the embodiment, the safety switch 116 is on the bottom of the vehicle emblem 101, which is not limited herein. The controller 117 is configured to, when the safety switch 116 is disconnected, control the driving assembly 105 to switch to an idle state. When the driving assembly 105 is in the idle state, the raising and retracting assembly 102, under the action of the elastic assembly 115, moves down relative to the guiding assembly 103, so as to bring the vehicle emblem 101 to move down. The safety switch 116 may be a micro switch. The controller 117 is configured to detect an opened/closed state of the micro switch, and when detecting that the micro switch is in a disconnected state, which means the vehicle emblem 101 has collided or moved off the original position of the vehicle emblem 101, switch the state of the driving assembly 105 from a driven state to an idle state. In the idle state, the driving assembly 105 is not under stress but is connected with the flexible connection member 107 without any actual driving force. The raising and retracting assembly 102 slides down along the guideway 109 under the effect of its own gravity and the action of the elastic assembly 115, and hence the vehicle emblem 101, upon being collided or touched, can quickly move down below the molded surface of the front end of the vehicle, realizing better safety.

In the embodiments shown in FIG. 1 to FIG. 2, the elastic assembly 115 includes an elastic member 118 and a base 119 disposed below the elastic member 118 to assemble the elastic member 118. The base 119 is stationary relative to the vehicle body. The base 119 is used to assemble the elastic member 118, achieving the effect of fixing and supporting the elastic member 118. The elastic member 118 is connected with the vehicle emblem linkage rod 112. When the driving assembly 105 is in an idle state, the vehicle emblem linkage rod 112, under the elastic action of the elastic member 118, moves down relative to the guiding assembly 103 to bring the vehicle emblem 101 to move down. In the embodiment, the elastic member 118 is a spring that includes a stretched state and a contraction state. When the vehicle emblem 101 ascends to a highest position, the spring is in the stretched state, whereas when the vehicle emblem 101 descends to a lowest position, the spring is in the contraction state. When the vehicle emblem 101 is collided or touched, the safety switch is disconnected, and the controller 117, when detecting that the safety switch 116 is disconnected, switches the state of the driving assembly 105 to the idle state. In the idle state, the driving assembly 105 does not generate any driving force, and under no stress, the spring switches from the stretched state to the contraction state, and the raising and retracting assembly 102, under its gravity and the elastic force of the spring, slides down along the guideway 109, so as to realize quick descent of the vehicle emblem 101. In this way, the vehicle emblem 101, upon being collided or touched, can quickly move down below the molded surface of the front end of the vehicle, achieving better safety. In the present disclosure, the spring is below the vehicle emblem linkage rod 112 to effectively utilize the space below the raising and retracting assembly 102, making the layout more compact, reducing the limitation of the arrangement space, bringing convenience to assembling, and lowering the costs.

In this embodiment, the vehicle emblem raising and retracting device 100 further includes a position sensor connected with the controller 117. The position sensor is on the first slide portion 113 of the raising and retracting assembly 102. The position sensor is configured to detect a moving position of the raising and retracting assembly 102 and output a corresponding electrical signal. The controller 117 is configured to, based on the electrical signal, control the driving assembly 105 to drive the flexible connection member 107 and thus enable the raising and retracting assembly 102 to drive the vehicle emblem 101 to move to a designated position.

In the related arts, the vehicle emblem 101 includes a three-dimensional vehicle emblem and a flat vehicle emblem. The three-dimensional vehicle emblem usually protrudes from the vehicle body, making itself easily collided by pedestrians or broken by people intentionally. When the three-dimensional vehicle emblems are collided or moved by people intentionally or accidentally, the vehicle emblems will be damaged, lowering the vehicle emblem identification and leading to poor aesthetics. In order to solve the problem, the present disclosure further provides a new vehicle emblem raising and retracting device 100, as shown in FIG. 4 to FIG. 10 below.

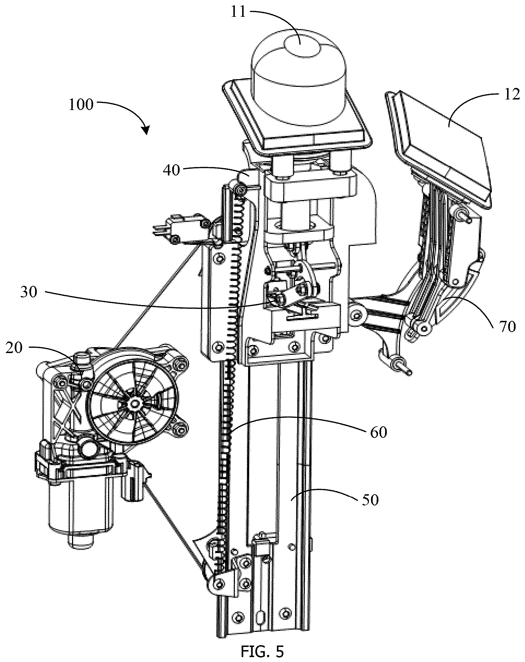

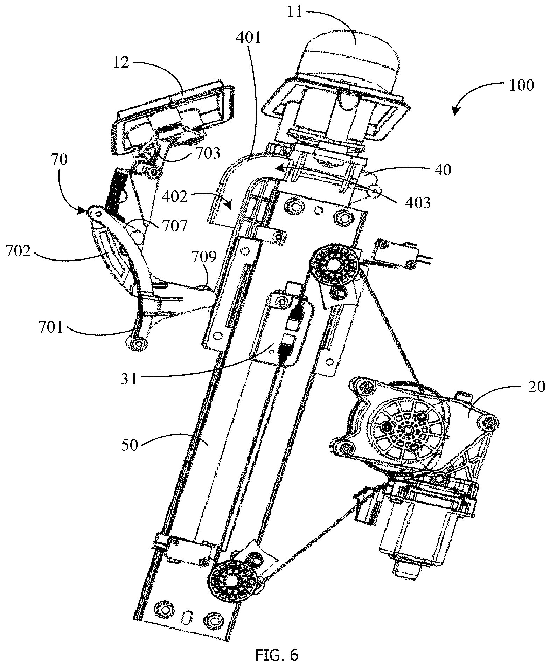

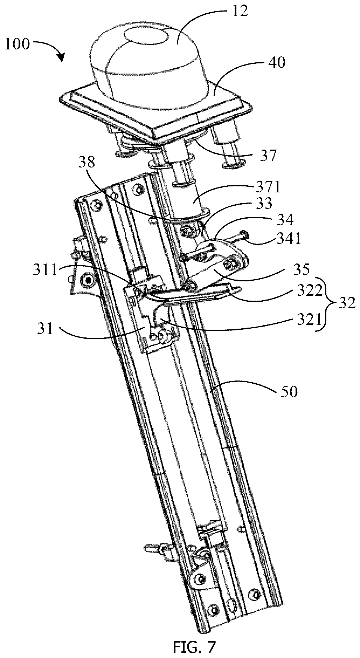

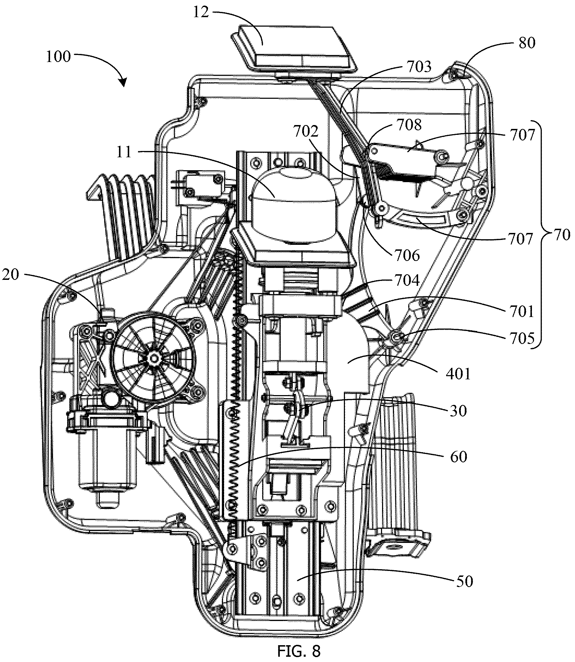

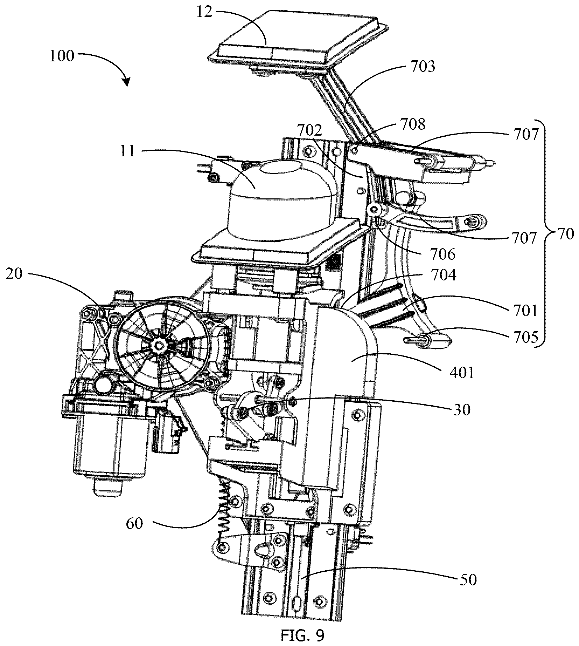

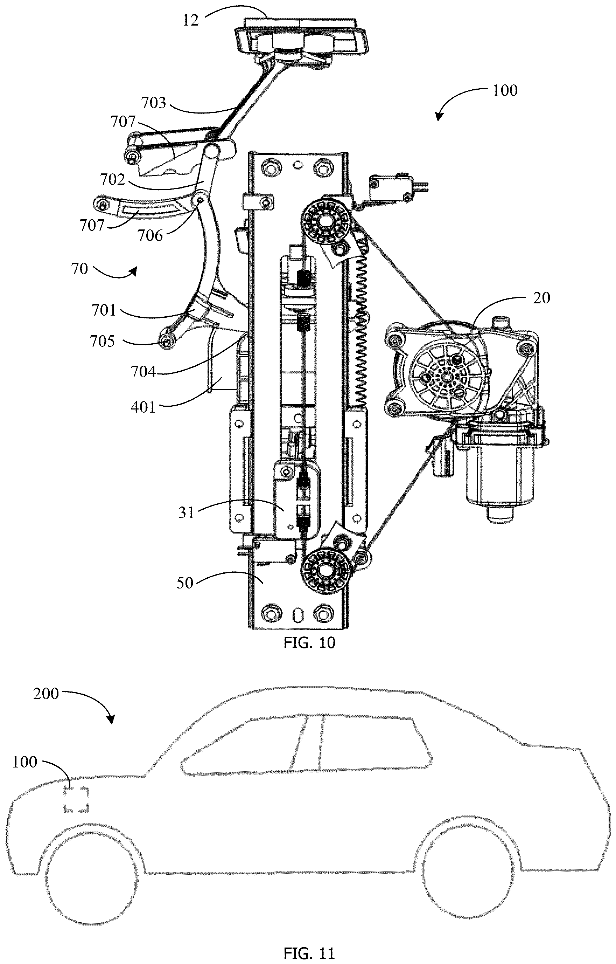

FIG. 4 is a structural schematic diagram illustrating an another embodiment of the vehicle emblem raising and retracting device 100 of FIG. 1 in a raised state. FIG. 5 is a schematic diagram illustrating a partial structure of the vehicle emblem raising and retracting device 100 of FIG. 4. FIG. 6 is a rear-view schematic diagram illustrating the vehicle emblem raising and retracting device 100 of FIG. 5. FIG. 7 is a schematic diagram illustrating a partial structure of the vehicle emblem raising and retracting device 100 in FIG. 4. In the embodiments shown in FIG. 4 to FIG. 7, the vehicle emblem raising and retracting device 100 is in a normal state, that is, the three-dimensional vehicle emblem 11 is in a raised state, and the vehicle 200 displays the three-dimensional vehicle emblem 11. FIG. 8 is a structural schematic diagram illustrating an another embodiment of the vehicle emblem raising and retracting device 100 of FIG. 1 in a lowered state. FIG. 9 is a schematic diagram illustrating a partial structure of the vehicle emblem raising and retracting device 100 in FIG. 8. FIG. 10 is a rear-view schematic diagram illustrating the vehicle emblem raising and retracting device 100 in FIG. 9. In the embodiments of FIG. 8 to FIG. 10, the vehicle emblem raising and retracting device 100 is in a triggered state. In this triggered state, the three-dimensional vehicle emblem 11 can be actively lowered while the flat vehicle emblem 12 is guided to raise. In the triggered state, the three-dimensional vehicle emblem 11 may be collided, and the flat vehicle emblem 12 is passively triggered to raise, and hence the vehicle 200 displays the flat vehicle emblem 12.

Compared with the embodiments shown in FIG. 1 to FIG. 3, in the embodiments shown in FIG. 4 to FIG. 10, the vehicle emblem raising and retracting device 100 may further include a clutch mechanism 30 and a linkage rod mechanism 70; a driving mechanism 20 is on the vehicle body of the vehicle 200, and the clutch mechanism 30 is selectively connected with the driving mechanism 20 and the three-dimensional vehicle emblem 11. When the clutch mechanism 30 is engaged with the driving mechanism 20 and the three-dimensional vehicle emblem 11, the driving mechanism 20 can, through the clutch mechanism 30, drive the three-dimensional vehicle emblem 11 to move relative to the vehicle body of the vehicle 200 and support the three-dimensional vehicle emblem 11; when the clutch mechanism 30 is disengaged from the driving mechanism 20 and the three-dimensional vehicle emblem 11, the three-dimensional vehicle emblem 11 can move down under the effect of its own gravity.

In the embodiment, the driving mechanism 20 is assembled to the vehicle body of the vehicle 200. The driving mechanism 20 may include the above driving assembly 105. The clutch mechanism 30 is assembled below the three-dimensional vehicle emblem 11 and selectively connected with the driving mechanism 20. Engaging and disengaging can be realized when a specific condition is satisfied. When the clutch mechanism 30 is engaged with the driving mechanism 20, the driving mechanism 20 drives the clutch mechanism 30 to bring the three-dimensional vehicle emblem 11 to move up and down relative to the vehicle body. When the clutch mechanism 30 is disengaged from the driving mechanism 20, the clutch mechanism 30 and the three-dimensional vehicle emblem 11 move down into the vehicle body under their own gravity. The linkage rod mechanism 70 is assembled below the flat vehicle emblem 12 and located at a side of the clutch mechanism 30 and abutted against the clutch mechanism 30. When the clutch mechanism 30 is disengaged from the driving mechanism 20, the clutch mechanism 30, during its descent, guides the linkage rod mechanism 70 to bring the flat vehicle emblem 12 to move up relative to the vehicle body, to make the flat vehicle emblem 12 above the three-dimensional vehicle emblem 11 without extending beyond the top surface of the vehicle body.

In the vehicle emblem raising and retracting device 100 and the vehicle 200 provided by the embodiments of the present disclosure, the vehicle emblem raising and retracting device 100 is provided with the driving mechanism 20, the clutch mechanism 30 and the linkage rod mechanism 70, the three-dimensional vehicle emblem 11 is assembled by using the clutch mechanism 30, and the flat vehicle emblem 12 is assembled by using the linkage rod mechanism 70; the clutch mechanism 30 is below the three-dimensional vehicle emblem 11 and selectively connected with the driving mechanism 20; when the clutch mechanism 30 is engaged with the driving mechanism 20, the driving mechanism 20 drives the clutch mechanism 30 to bring the three-dimensional vehicle emblem 11 to move up and down relative to the vehicle body; when the clutch mechanism 30 is disengaged from the driving mechanism 20, the clutch mechanism 30 and the three-dimensional vehicle emblem 11 move down into the vehicle body under the effect of their own gravities; meanwhile, the clutch mechanism 30, during its descent, guides the linkage rod mechanism 70 to bring the flat vehicle emblem 12 to move up relative to the vehicle body, to make the flat vehicle emblem 12 above the three-dimensional vehicle emblem 11 without extending beyond the top surface of the vehicle body. Therefore, under a normal state, the clutch mechanism 30 is connected with the three-dimensional vehicle emblem 11 and the driving mechanism 20, and the vehicle emblem raising and retracting device 100 can control, through the driving mechanism 20, the three-dimensional vehicle emblem 11 to move up and remain unchanged at one position; when the three-dimensional vehicle emblem 11 needs to move down normally, the driving mechanism 20 also can lower and retract the three-dimensional vehicle emblem 11 into the vehicle body by the clutch mechanism 30. When the three-dimensional vehicle emblem 11 is collided a by pedestrian or is moved by an external force, the clutch mechanism 30 can directly disconnect the three-dimensional vehicle emblem 11 from the driving mechanism 20, such that the three-dimensional vehicle emblem can quickly move down under the effect of its own gravity. The descending speed of the descending mode under the effect of gravity of the three-dimensional vehicle emblem is faster than that of the descending mode under the drive of the driving mechanism 20, effectively protecting the three-dimensional vehicle emblem 11. After the three-dimensional vehicle emblem 11 moves down, the linkage rod mechanism 70 brings the flat vehicle emblem 12 to move above the three-dimensional vehicle emblem 11, thereby displaying the flat vehicle emblem 12 and hence maintaining the vehicle emblem identification. Furthermore, the three-dimensional vehicle emblem 11 can be protected by the flat vehicle emblem 12, and a through hole for inserting the three-dimensional vehicle emblem 11 can be covered by the flat vehicle emblem 12, making the surface of the vehicle body beautiful and improving the user experience.

In the embodiment, the clutch mechanism 30 is between the driving mechanism 20 and the three-dimensional vehicle emblem 11, and can perform selective engaging or disengaging. Thus, when the three-dimensional vehicle emblem 11 ascends and remains at a position, the clutch mechanism 30 can engage the driving mechanism 20 with the three-dimensional vehicle emblem 11. At this time, the driving mechanism 20 can drive the three-dimensional vehicle emblem 11 to slowly move up and down relative to the vehicle body of the vehicle 200, so as to ensure normal use of the three-dimensional vehicle emblem 11. When the three-dimensional vehicle emblem 11 is collided by pedestrians, or moved or stolen, the clutch mechanism 30 can disengage the driving mechanism 20 with the three-dimensional vehicle emblem 11, and thus the three-dimensional vehicle emblem 11 loses the support of the driving mechanism 20 and quickly moves down into the vehicle body under its gravity, avoiding being damaged or stolen.

In the embodiments shown in FIG. 4 to FIG. 7, the vehicle emblem raising and retracting device 100 further includes a mounting seat 40, where the three-dimensional vehicle emblem 11 is erected on the mounting seat 40, and the clutch mechanism 30 is at least partially on the mounting seat 40. In this way, The mounting seat 40 can provide supporting and protection to the three-dimensional vehicle emblem 11 and a part of the driving mechanism 20, such that the three-dimensional vehicle emblem 11 can move up and down together with the mounting seat 40, and when the driving mechanism 20 disengages the driving mechanism 20 with the three-dimensional vehicle emblem 11, the three-dimensional vehicle emblem 11 and the part of the driving mechanism 20 can quickly move down together with the mounting seat 40, ensuring stable movement of the vehicle emblem raising and retracting device 100.

In some embodiments, the mounting seat 40 can be movably disposed on the vehicle body of the vehicle 200, and when the three-dimensional vehicle emblem 11 moves up and down, the mounting seat 40 can bear the three-dimensional vehicle emblem 11. The driving mechanism 20 may be connected with the clutch mechanism 30 and a part of the clutch mechanism 30 is directly on the mounting seat 40. Therefore, the driving mechanism 20 can, when driving the clutch mechanism 30 to move, bring the entire mounting seat 40 and the three-dimensional vehicle emblem 11 on the mounting seat 40 to move together, ensuring the stability of the vehicle emblem raising and retracting device 100.

In the embodiments shown in FIG. 4 to FIG. 7, the clutch mechanism 30 includes a slide block 31 and a pin 32 slidably inserted in the slide block 31. The driving mechanism 20 is connected with the slide block 31, the pin 32 is movably disposed on the mounting seat 40, and one end of the pin 32 away from the slide block 31 is connected with the three-dimensional vehicle emblem 11. Therefore, the function of the clutch mechanism 30 can be implemented through connection and disconnection between the pin 32 and the slide block 31. When it is required to move up and maintain the three-dimensional vehicle emblem 11, the pin 32 can be inserted in the slide block 31, such that the driving mechanism 20 can, through the slide block 31 and the pin 32, bring the three-dimensional vehicle emblem 11 to move up and remain at a fixing position. Thus, the user can get to know the brand of the vehicle 200 by the three-dimensional vehicle emblem 11. After the pin 32 slides out of the slide block 31, the three-dimensional vehicle emblem 11 and the mounting seat 40 can quickly move down under their own gravities, preventing the three-dimensional vehicle emblem 11 from being damaged.

In the embodiments shown in FIG. 4 to FIG. 7, the pin 32 includes a first end 321 and second end 322 that are opposite to each other, and the slide block 31 includes a position limiting groove 311; the second end 322 is connected with the three-dimensional vehicle emblem 11, and the first end 321 protrudes into the position limiting groove 311 to enable the slide block 31 to, through the pin 32, bring the three-dimensional vehicle emblem 11 to move up and down. Thus, the three-dimensional vehicle emblem 11 can be connected with the second end 322, and when the three-dimensional vehicle emblem 11 is collided by pedestrians or moved by external force, the second end 322 can bring the first end 321 to slide out of the position limiting groove 311, and thus the pin 32 and the three-dimensional vehicle emblem 11 can be freed from the support of the slide block 31, and quickly move down under their own gravity, so as to retract into the vehicle body of the vehicle 200, preventing the three-dimensional vehicle emblem 11 from being damaged.

In the embodiments shown in FIG. 4 to FIG. 7, the clutch mechanism 30 further includes an upper swing rod 33, a rocking rod 34, and a lower swing rod 35 sequentially connected from top down. The rocking rod 34 is rotatably fixed on the mounting seat 40 through a fixing shaft 341, and both ends of the rocking rod 34 are respectively connected with the upper swing rod 33 and the lower swing rod 35. An end of the upper swing rod 33 away from the rocking rod 34 is connected with the three-dimensional vehicle emblem 11, and an end of the lower swing rod 35 away from the rocking rod 34 is connected with the pin 32. In this way, the upper swing rod 33, the rocking rod 34, and the lower swing rod 35 are sequentially connected and cooperated. When the three-dimensional vehicle emblem 11 is collided by pedestrians or moved by external force, the upper swing rod 33, the rocking rod 34 and the lower swing rod 35 together can convert a movement direction and enlarge a travel to enable the pin 32 to slide out of the slide block 31, and hence the three-dimensional vehicle emblem 11 can quickly move down under its own gravity.

In these embodiments, the upper swig rod 33, the rocking rod 34, the lower swing rod 35, and the pin 32 can be disposed inside the mounting seat 40, and the mounting seat 40 can provide protection to prevent interference from external components during the transmission of the upper swig rod 33, the rocking rod 34, the lower swing rod 35, and the pin 32. The upper swing rod 33, the rocking rod 34, the lower swing rod 35 and the second end 322 of the pin 32 are sequentially hinged together, while the fixing shaft 341 is inserted in the middle part of the rocking rod 34, the fixing shaft 341 is fixed on the mounting seat 40. Therefore, when the upper swing rod 33 rotates, the rocking rod 34 can be driven to rotate around the fixing shaft 341, and the lower swing rod 35 can drag the second end 322 to drag the pin 32 out of the position limiting groove 311 of the slide block 31, realizing the disengaging action of the clutch mechanism 30. At this time, the mounting seat 40, three-dimensional vehicle emblem 11, a first elastic member (not shown), the upper swing rod 33, the rocking rod 34, the lower swing rod 35, and the pin 32 are no longer supported and can quickly move down under their own gravities. Certainly, in other embodiments, it is also possible to connect without hinging as long as the upper swing rod 33 can trigger the rocking rod 34 to rotate and the pin 32 can be pulled out by the lower swing rod 35, which is not limited herein. Based on the characteristics of the rotation and travel enlargement of the swing rods and cams, the swing rods are connected with the cams to convert the movement direction and enlarge the travel. By adjusting a distance between the swing rods and the rotation center of the cams, a force value and a travel for triggering quick descent of the three-dimensional vehicle emblem 11 can be adjusted. Further, by using the pin 32, during the slow descent and ascent of the driving mechanism 20, the pin 32 as a connection structure can transfer power. In the case of quick descent, the pin 32 performs separation action to separate the three-dimensional vehicle emblem 11 with the driving mechanism 20, and the three-dimensional vehicle emblem 11 can, under the elastic force of the assisting spring, move down with super-gravitational acceleration. The pin 32 is unlocked in this way: the crank swing rod transfers power to convert a vertical displacement of the three-dimensional vehicle emblem 11 into a transverse displacement, reducing the costs under the precondition of the same function.

In the embodiments shown in FIG. 4 to FIG. 7, the clutch mechanism 30 further includes a first elastic member and a transmission base 37. The three-dimensional vehicle emblem 11 is on the transmission base 37, and both ends of the first elastic member are respectively connected to the transmission base 37 and the upper swing rod 33. Thus, the three-dimensional vehicle emblem 11 and the first elastic member are respectively at both sides of the transmission base 37. A movement amount of the three-dimensional vehicle emblem 11 in respective directions can be converted by the first elastic member into the vertical displacement. The first elastic member can bring the upper swing rod 33 to rotate, and the upper swing rod 33, the rocking rod 34, and the lower swing rod 35 sequentially and cooperatively rotate so as to pull the pin 32 out of the position limiting groove 311 of the slide block 31, realizing disengagement of the clutch mechanism 30, and further ensuring that the three-dimensional vehicle emblem 11 can quickly move down under its own gravity.

In the embodiments shown in FIG. 4 to FIG. 7, the transmission base 37 is further provided with a linkage rod 371, and the first elastic member is inserted in the linkage rod 371. Therefore, the linkage rod 371 can be sleeved on the first elastic member without affecting the normal movement of the first elastic member, which ensures that the first elastic member can stay in the vertical direction and ensures the direction and position accuracy of the first elastic member. Further, the linkage rod 371 can protect the first elastic member.

In some embodiments, the clutch mechanism 30 further includes a linkage seat 38 on the mounting seat 40, where a through hole (not shown) is formed in the linkage seat 38. The linkage rod 371 is inserted in the through hole and slidable relative to the linkage seat 38. Both ends of the first elastic member are respectively connected to the transmission base 37 and the linkage seat 38, and the linkage rod 371 is hinged to an end of the upper swing rod 33 away from the rocking rod 34. In this way, the transmission base 37 and the linkage seat 38 can be elastically supported by the first elastic member. When the three-dimensional vehicle emblem 11 is collided by pedestrians or moved by external force, the first elastic member can convert the displacement of other directions into the displacement of the vertical direction, such that the transmission base 37 can bring the linkage rod 371 to move downward through the through hole to push the upper swing rod 33, thereby triggering the pin 32 to slide out of the position limiting groove 311.

Illustratively, when the three-dimensional vehicle emblem 11 is touched, the three-dimensional vehicle emblem 11 moves down by compressing the first elastic member through the transmission base 37, and the linkage rod 371 runs through the through hole of the linkage seat 38 to push down the upper end of the upper swing rod 33. The upper swing rod 33 can bring the rocking rod 34 to rotate counterclockwise around the fixing shaft 341, so as to enable the lower swing rod 35 to drag the pin 32 out of the position limiting groove 311.

In some embodiments, the linkage rod 371 may further include a chamber, where the first elastic member is in the chamber of the linkage rod 371. The linkage seat 38 is respectively connected with the first elastic member and the upper swing rod 33. In this way, the first elastic member can be moved in the vertical direction, while the linkage rod 371 can also protect the first elastic member.

In the embodiments shown in FIG. 4 to FIG. 10, the vehicle emblem raising and retracting device 100 further includes a slide rail 50 on the vehicle body of the vehicle 200. The slide block 31 is slidably disposed on the slide rail 50. Therefore, the slide block 31 may be disposed on the slide rail 50, and the driving mechanism 20 may drive the slide block 31 to vertically move along the slide rail 50, thereby ensuring that the three-dimensional vehicle emblem 11 can normally move up and down. In this embodiment, the slide block 31 is at a side of the slide rail 50 away from the clutch mechanism 30 mounted on the mounting seat 40, and thus the space before and after the slide rail 50 can be effectively utilized, making the entire vehicle emblem raising and retracting device 100 smaller in width and volume.

In some embodiments, the slide rail 50 can be vertically disposed on the vehicle body of the vehicle 200, and the driving mechanism 20 can drive the slide block 31 to move along the slide rail 50 to bring the mounting seat 40 and the three-dimensional vehicle emblem 11 to move along the slide rail 50, realizing the function of moving up and down of the three-dimensional vehicle emblem 11. When the three-dimensional vehicle emblem 11 is collided by pedestrians or moved by external force, the pin 32 slides out of the position limiting groove 311, such that the pin 32 and the three-dimensional vehicle emblem 11 can be freed from the support of the slide block 31, and the mounting seat 40 and the three-dimensional vehicle emblem 11 can quickly move down and retract into the vehicle body under their gravities. At this time, the driving mechanism 20 can drive the slide block 31 to slide down along the slide rail 50 to a predetermined position, and then the slide block 31 is reconnected with the pin 32 to be ready to drive the three-dimensional vehicle emblem 11 and the mounting seat 40 to rise again later.

In the embodiments shown in FIG. 4 to FIG. 7, the vehicle emblem raising and retracting device 100 further includes a second elastic member 60, where the second elastic member 60 is in a tensioned state and respectively connected with the mounting seat 40 and the vehicle body of the vehicle 200. When the three-dimensional vehicle emblem 11 is collided by pedestrians or moved by external force, the pin 32 slides out of the position limiting groove 311, such that the pin 32 and the three-dimensional vehicle emblem 11 can be freed from the support of the slide block 31, and the mounting seat 40 and the three-dimensional vehicle emblem 11 can quickly move downward under their gravities. Further, the second elastic member 60 can accelerate, pulling the mounting seat 40 by its own elasticity to increase the descending speed of the mounting seat 40 and the three-dimensional vehicle emblem 11, so as to enable the three-dimensional vehicle emblem 11 to retract into the vehicle body of the vehicle 200, avoiding damage to the three-dimensional vehicle emblem 11.

It should be noted that in the embodiment, the connection position of the second elastic member 60 is not limited as long as the second elastic member 60 is in a tensioned state and is respectively connected with the mounting seat 40 and the vehicle body. In an example, an upper end of the second elastic member 60 may be connected with the mounting seat 40, and a lower end of the second elastic member 60 may be connected with the bottom of the slide rail 50, such that the instant the pin 32 and the three-dimensional vehicle emblem 11 are freed from the support of the slide block 31, the mounting seat 40 and the three-dimensional vehicle emblem 11 can quickly retract under their own gravities and the elasticity of the second elastic member 60. In the embodiment, the specific forms of the first elastic member and the second elastic member 60 are not limited to satisfy different requirements. For example, the first elastic member and the second elastic member 60 may be vertically-placed springs. Furthermore, in other embodiments, another quick descent mechanism may be included to facilitate the three-dimensional vehicle emblem 11 and the mounting seat 40 to quickly move down, which is not limited herein.

In the embodiments shown in FIG. 4 to FIG. 10, the three-dimensional vehicle emblem 11 is assembled to the top of the mounting seat 40, and the clutch mechanism 30 is at least partially on the mounting seat 40. The driving mechanism 20 and the flat vehicle emblem 12 are at a side of the mounting seat 40, and a guiding structure 401 is at a side of the mounting seat 40 close to the driving mechanism 20. When the clutch mechanism 30 is engaged with the driving mechanism 20, an end of the driving mechanism 20 is abutted against a sidewall of the mounting seat 40. In this state, the clutch mechanism 30 supports the three-dimensional vehicle emblem 11. When the clutch mechanism 30 is disengaged from the driving mechanism 20 and moves down, the mounting seat 40 guides, by the guiding structure 401, the linkage rod mechanism 70 to move, such that the flat vehicle emblem 12 can be moved up relative to the vehicle body of the vehicle 200, and snapped to the linkage rod mechanism 70 through the guiding structure 401. In this state, the flat vehicle emblem 12 takes the place of the three-dimensional vehicle emblem 11; when the flat vehicle emblem 12 is at a raised position, the linkage rod mechanism 70 is snapped with the guiding structure 401, such that the flat vehicle emblem 12 is maintained at a position for displaying, avoiding moving down upon touch by external force, and realizing better stability.

In the embodiments shown in FIG. 4 and FIG. 8 to FIG. 10, the vehicle emblem raising and retracting device 100 further includes a housing 80. The housing 80 achieves the effect of fixing and accommodation. The linkage rod mechanism 70 includes an abutting linkage rod 701, a transmission linkage rod 702, and a support linkage rod 703. One end of the abutting linkage rod 701 is abutted against the mounting seat 40, and another end of the abutting linkage rod 701 is connected with one end of the transmission linkage rod 702; another end of the transmission linkage rod 702 is connected with one end of the support linkage rod 703, and another end of the support linkage rod 703 is connected with the flat vehicle emblem 12. When the clutch mechanism 30 moves down, the mounting seat 40 guides, through the guiding structure 401, the abutting linkage rod to move, and thus bring the transmission linkage rod 702 to move, and hence bring the support linkage rod 703 to support the flat vehicle emblem 12 to move up relative to the vehicle body of the vehicle. Therefore, by using the guiding structure 401 of the mounting seat 40 brings the abutting linkage rod 701 to move, and to bring the transmission linkage rod 702 to unfold to support the support linkage rod 703, so as to bring the support linkage rod 703 to rise, making the flat vehicle emblem 12 move up relative to the vehicle body. When the flat vehicle emblem 12 is at a raised position (as shown in FIG. 8), there are movement locking points among the multiple linkage rods formed by the abutting linkage rod 701, the transmission linkage rod 702 and the support linkage rod 703, and there is a constraint between the guiding structure 401 and the abutting linkage rod 701, when a downward force applies to the flat vehicle emblem 12, the flat vehicle emblem 12 will not be triggered to move down. The movement of the flat vehicle emblem 12 can be achieved by the guiding structure 401 moving up and down to push the abutting linkage rod 701 and further drive multi-linkage rod connection formed by the transmission linkage rod 702, and the support linkage rod 703. In this arrangement, after the three-dimensional vehicle emblem 11 moves down, the abutting linkage rod 701, the transmission linkage rod 702 and the support linkage rod 703 sequentially perform transmission to bring the flat vehicle emblem 12 to move up relative to the vehicle body, such that the flat vehicle emblem 12 is above the three-dimensional vehicle emblem 11. At this time, the flat vehicle emblem 12 is displayed and thus, the vehicle emblem identification is not affected. Furthermore, the flat vehicle emblem 12 can protect the three-dimensional vehicle emblem 11, and the through hole for inserting the three-dimensional vehicle emblem 11 on the vehicle body can be covered by the flat vehicle emblem 12, making the surface of the vehicle body beautiful and improving the user experience.

In the embodiments shown in FIG. 4, and FIG. 8 to FIG. 10, the abutting linkage rod 701 includes an abutting end 704, a first connection end 705, and a second connection end 706. The abutting end 704 is abutted against the mounting seat 40, the first connection end 705 is movably connected with an inner wall of the housing 80, and the second connection end 706 is movably connected with one end of the transmission linkage rod 702; the abutting end 704, the first connection end 705 and the second connection end 706 form a triangle, in this arrangement, higher stability is achieved. In a vertical direction, the abutting end 704 is between the first connection end 705 and the second connection end 706, and the first connection end 705 is below the abutting end 704; in a horizontal direction, the abutting end 704 is disposed closer to the mounting seat than the first connection end 705 and the second connection end 706. The guiding structure 401 of the mounting seat 40 brings the abutting end 704 of the abutting linkage rod 701 to move and further brings the first connection end 705 and the second connection end 706 of the abutting linkage rod 701 to move, so as to bring the transmission linkage rod 702 and the support linkage rod 703 to rotatably unfold to support the support linkage rod 703, and bring the support linkage rod 703 to rise, thereby moving up the flat vehicle emblem 12 relative to the vehicle body. When the flat vehicle emblem 12 is at a raised position (as shown in FIG. 8), there are movement locking points among the multiple linkage rods formed by the abutting linkage rod 701, the transmission linkage rod 702 and the support linkage rod 703, and there is a constraint between the guiding structure 401 and the abutting linkage rod 701, when a downward force applies to the flat vehicle emblem 12, the flat vehicle emblem 12 will not be triggered to move down. The movement of the flat vehicle emblem 12 can be achieved by the guiding structure 401 moving up and down to push the abutting linkage rod 701 and further drive multi-linkage rod connection formed by the transmission linkage rod 702 and the support linkage rod 703. In this embodiment, the transmission linkage rod 702 is connected between the second connection end 706 and a support point 708. When the support linkage rod 703 supports the flat vehicle emblem 12 to be above the three-dimensional vehicle emblem 11, the support point 708 is in the same line as the first connection end 705, and the second connection end 706, and three axes share the same line to form the movement locking point. The flat vehicle emblem 12 is subjected to force and will not be triggered by rotational movement. Further, there is a constraint between the guiding structure 401 and the abutting linkage rod 701. When a downward force applies to the flat vehicle emblem 12, the flat vehicle emblem 12 will not be triggered to move down, thereby achieving better safety.

In the embodiments shown in FIG. 4 to FIG. 10, the driving mechanism 20 further includes at least one movable linkage rod 707, and the support linkage rod 703 includes the support point 708; some movable linkage rods 707 of the at least one movable linkage rod 707 are connected between the support point 708 and the inner wall of the housing 80; and other movable linkage rods 707 of the at least one movable linkage rod 707 are connected between the bottom of the support linkage rod 703 and the inner wall of the housing 80. With this arrangement, it is ensured that, driven by the abutting linkage rod 701, at least one movable linkage rod 707 can assist the transmission linkage rod 702 and the support linkage rod 703 in rotation to support the flat vehicle emblem 12 to rise, thereby achieving better flexibility and better stability. In the embodiments shown in FIG. 4 to FIG. 10, there is at least one support point 708. In some embodiments, there are one or more support points 708. At least one support point 708 is disposed offset from the middle region of the support linkage rod 703 and close to the bottom of the support linkage rod 703. In the embodiment, there is one support point 708; by providing one support point 708, the movable linkage rod 707 being connected at the support point 708 is more favorable for rotational unfolding of the transmission linkage rod 702 and the support linkage rod 703 to facilitate the flat vehicle emblem 12 to rise, thereby achieving better flexibility and better stability.

In the embodiments shown in FIG. 4 to FIG. 6, when the clutch mechanism 30 is engaged with the driving mechanism 20, the bottom of the support linkage rod 703 extends to below at least one transmission linkage rod 702 and the transmission linkage rod 702 and at least one movable linkage rod 707 are folded and accommodated at a side of the support linkage rod 703 away from the mounting seat 40. With this arrangement, the space in the housing 80 can be effectively utilized, it is ensured that the linkage rod mechanism 70 constrains the up-down movement trajectory of flat vehicle emblem 12 and ensures the movement clearance of peripheral members. In the embodiments shown in FIG. 4 to 10, when the clutch mechanism 30 is disengaged from the driving mechanism 20, the first connection end 705, the second connection end 706 and the connection point between the movable linkage rod 707 and the housing 80 form a triangle. In this arrangement, the formed triangle ensures the stability that the linkage rod mechanism 70 constrains the up-down movement of the flat vehicle emblem 12.

In the embodiments shown in FIG. 4 to FIG. 10, the linkage rod mechanism 70 further includes a slide wheel 709 at the abutting end 704. The guiding structure 401 includes a vertical guiding groove 402 and a horizontal guiding groove 403 in communication with the vertical guiding groove 402. The horizontal guiding groove 403 is above the vertical guiding groove 402 and extends horizontally, and the vertical guiding groove 402 extends vertically. When the clutch mechanism 30 moves down, the abutting end 704 slides from the vertical guiding groove 402 to the horizontal guiding groove 403 via the slide wheel 709, and is snapped to the horizontal guiding groove 403. The provision of the slide wheel 709 is facilitated for guiding the abutting linkage rod 701 of the linkage rod mechanism 70 to move, and with the sidewall position limitation of the slide wheel 709 as position limiting supporting of a rolling wheel, the moving and stopping stability of the linkage rod mechanism 70 can be improved, and thus the flat vehicle emblem 12 can be smoothly moved up when the three-dimensional vehicle emblem 11 is moved down.

FIG. 11 is a schematic diagram illustrating a vehicle according to an embodiment of the present disclosure. As shown in FIG. 11, the vehicle 200 includes a vehicle body, and the vehicle body is provided with the vehicle emblem raising and retracting device 100. In some embodiments, the vehicle emblem raising and retracting device 100 shown in the embodiments of FIG. 1 to FIG. 3 is inside a front end frame of the vehicle 200. The vehicle emblem raising and retracting device 100 brings the three-dimensional vehicle emblem 11 to protrude out of the front end frame of the vehicle body or retract into the front end frame. Therefore, the vehicle emblem raising and retracting device 100 can be accommodated or fixed in the space in the front end frame, making the structure more compact and fixing effect more table. In the embodiment, the vehicle body further includes a front bumper 2 on the front end frame. The front bumper 2 includes a via hole 201, where the vehicle emblem raising and retracting device 100 brings the three-dimensional vehicle emblem 11 to protrude out of the front end frame through the via hole 201 and above the front bumper 2; or to retract into the front end frame through the via hole 201 and below the front bumper 2. With this arrangement, the three-dimensional vehicle emblem 11 can be moved up and down at a constant speed and quickly moved down at an appropriate time, thereby increasing the selectivity. In some embodiments, the vehicle emblem raising and retracting device 100 shown in the embodiments of FIG. 4 to FIG. 10 can also be disposed on the vehicle body. The vehicle emblem raising and retracting device 100 shown in the embodiments of FIG. 4 to FIG. 10 can actively lower the three-dimensional vehicle emblem 11 while guiding the flat vehicle emblem 12 to rise, producing a better user experience. Alternatively, when the three-dimensional vehicle emblem 11 is collided, the flat vehicle emblem 12 is passively triggered to rise, and the vehicle 200 displays the flat vehicle emblem 12, thereby increasing the vehicle emblem identification and external aesthetics and improving the user experience.

Since the apparatus embodiments substantially correspond to the method embodiments, reference may be made to part of the descriptions of the method embodiments for the related part. The apparatus embodiments described above are merely illustrative, where the units described as separate members may be or may not be physically separated, and the members displayed as units may be or may not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

It shall be noted that the relational terms such as "first" and "second" used herein are merely intended to distinguish one entity or operation from another entity or operation rather than to require or imply any such actual relation or order existing between these entities or operations. Also, the term "include," "comprise," or any variation thereof is intended to encompass non-exclusive inclusion, such that processes, methods, articles or devices including a series of elements include not only those elements but also other elements not listed explicitly or those elements inherent to such processes, methods, articles or devices. Without more limitations, an element defined by the statement "including a..." shall not be precluded from including additional same elements present in the processes, methods, articles or devices including the elements.

The above are detailed descriptions of the methods and apparatuses provided according to the embodiments of the present disclosure. Specific examples are used herein to set forth the principles and the implementing methods of the present disclosure, and the descriptions of the above embodiments are only meant to help understand the methods and the core idea of the present disclosure. Meanwhile, those of ordinary skill in the art may make alterations to the specific embodiments and the scope of the present disclosure in accordance with the idea of the present disclosure. In conclusion, the contents of the present specification shall not be interpreted as limiting to the present disclosure.

## Claims

1. A vehicle emblem raising and retracting device, comprising:
a driving mechanism, assembled to a vehicle body of a vehicle;
a clutch mechanism, assembled below a three-dimensional vehicle emblem and selectively connected with the driving mechanism, wherein, when the clutch mechanism is engaged with the driving mechanism, the driving mechanism drives the clutch mechanism to bring the three-dimensional vehicle emblem to move up and down relative to the vehicle body; and when the clutch mechanism is disengaged from the driving mechanism, the clutch mechanism and the three-dimensional vehicle emblem move down under an effect of gravity of the clutch mechanism and the three-dimensional vehicle emblem and located inside the vehicle body; and
a linkage rod mechanism, assembled below a flat vehicle emblem and located at a side of the clutch mechanism and abutted against the clutch mechanism; wherein, when the clutch mechanism is disengaged from the driving mechanism, the clutch mechanism, during descent, guides the linkage rod mechanism to bring the flat vehicle emblem to move up relative to the vehicle body, to make the flat vehicle emblem above the three-dimensional vehicle emblem without extending beyond a top surface of the vehicle body.

2. The vehicle emblem raising and retracting device of claim 1, further comprising a mounting seat,
wherein the three-dimensional vehicle emblem is assembled on a top of the mounting seat, and the clutch mechanism is at least partially disposed on the mounting seat;
the linkage rod mechanism and the flat vehicle emblem are at a side of the mounting seat, and a guiding structure is provided at a side of the mounting seat close to the linkage rod mechanism;
when the clutch mechanism is engaged with the driving mechanism, an end of the linkage rod mechanism is abutted against a sidewall of the mounting seat; and
when the clutch mechanism is disengaged from the driving mechanism and the clutch mechanism moves down, the mounting seat, through the guiding structure, guides the linkage rod mechanism to move to bring the flat vehicle emblem to move up relative to the vehicle body of the vehicle and is snapped to the linkage rod mechanism through the guiding structure.

3. The vehicle emblem raising and retracting device of claim 2, further comprising a housing,
wherein the linkage rod mechanism comprises an abutting linkage rod, a transmission linkage rod and a support linkage rod;
wherein one end of the abutting linkage rod is abutted against a side of the mounting seat, another end of the abutting linkage rod is connected with one end of the transmission linkage rod, another end of the transmission linkage rod is connected with one end of the support linkage rod, and another end of the support linkage rod is connected with the flat vehicle emblem; and
when the clutch mechanism moves down, the mounting seat, through the guiding structure, guides the abutting linkage rod to move to bring the transmission linkage rod to move, so as to bring the support linkage rod to support the flat vehicle emblem to move up relative to the vehicle body of the vehicle.

4. The vehicle emblem raising and retracting device of claim 3, wherein
the abutting linkage rod comprises an abutting end, a first connection end and a second connection end;
wherein the abutting end is abutted against a side of the mounting seat, the first connection end is movably connected with an inner wall of the housing, and the second connection end is movably connected with an end of the transmission linkage rod;
the abutting end, the first connection end and the second connection end form a triangle; in a vertical direction, the abutting end is between the first connection end and the second connection end, and the first connection end is below the abutting end; and
in a horizontal direction, the abutting end is closer to the mounting seat than the first connection end and the second connection end.

5. The vehicle emblem raising and retracting device of claim 4, wherein the linkage rod mechanism further comprises at least one movable linkage rod, the support linkage rod comprises a supporting point, some movable linkage rods of the at least one movable linkage rod are connected between the support point and the inner wall of the housing, and other movable linkage rods of the at least one movable linkage rod are connected between a bottom of the support linkage rod and the inner wall of the housing;
the transmission linkage rod is connected between the second connection end and the support point;
when the support linkage rod supports the flat vehicle emblem to be above the three-dimensional vehicle emblem, the support point, the first connection end and the second connection end are on a same line; and/or,
there is at least one support point; and the at least one support point is disposed offset from a middle region of the support linkage rod and close to the bottom of the support linkage rod; and/or,
when the clutch mechanism is engaged with the driving mechanism, the bottom of the support linkage rod extends to below at least one transmission linkage rod, and the transmission linkage rod and the at least one movable linkage rod are folded and accommodated at a side of the support linkage rod away from the mounting seat; and/or,
when the clutch mechanism is disengaged from the driving mechanism, the first connection end, the second connection end, and a connection point between one of the at least one movable linkage rod and the housing form a triangle.

6. The vehicle emblem raising and retracting device of claim 4, wherein
the linkage rod mechanism further comprises a slide wheel on the abutting end;
the guiding structure comprises a vertical guiding groove and a horizontal guiding groove in communication with the vertical guiding groove, the horizontal guiding groove is above the vertical guiding groove and extends horizontally, and the vertical guiding groove extends vertically; and
when the clutch mechanism moves down, the abutting end slides from the vertical guiding groove to the horizontal guiding groove via the slide wheel and is snapped to the horizontal guiding groove.

7. The vehicle emblem raising and retracting device of claim 2, further comprising a slide rail on the vehicle body;
wherein the clutch mechanism comprises a slide block and a pin, the slide block is slidably disposed on the slide rail, the pin is slidably inserted in the slide block, the driving mechanism is connected with the slide block, the pin is movably disposed on the mounting seat, and an end of the pin away from the slide block is connected with the three-dimensional vehicle emblem.

8. The vehicle emblem raising and retracting device of claim 7, wherein the pin comprises a first end and second end that are opposite to each other, the slide block comprises a position limiting groove, the second end is connected with the three-dimensional vehicle emblem via the clutch mechanism, and the first end protrudes into the position limiting groove to enable the slide block to bring, through the pin, the clutch mechanism to move up and down, to bring the three-dimensional vehicle emblem to move up and down.

9. The vehicle emblem raising and retracting device of claim 7, wherein
the clutch mechanism further comprises an upper swing rod, a rocking rod and a lower swing rod sequentially connected from top down;
wherein the rocking rod is rotatably fixed on the mounting seat through a fixing shaft, and both ends of the rocking rod are respectively connected with the upper swing rod and the lower swing rod; and
an end of the upper swing rod away from the rocking rod is connected with the three-dimensional vehicle emblem, and an end of the lower swing rod away from the rocking rod is connected with the pin.

10. The vehicle emblem raising and retracting device of claim 9, wherein
the clutch mechanism further comprises a first elastic member and a transmission base; and
the three-dimensional vehicle emblem is on a top of the transmission base, and both ends of the first elastic member are respectively connected with the transmission base and the upper swing rod; and/or,
a bottom of the transmission base is further provided with a linkage rod, and the first elastic member is inserted in the linkage rod; and/or,
the bottom of the transmission base is further provided with a linkage rod; and the clutch mechanism further comprises a linkage seat on the mounting seat, a through hole is formed in the linkage seat, the linkage rod is inserted in the through hole and slidable relative to the linkage seat, both ends of the first elastic member are respectively connected with the transmission base and the mounting seat, and the linkage rod is hinged to an end of the upper swing rod away from the rocking rod; and/or,
the vehicle emblem raising and retracting device further comprises a second elastic member, and the second elastic member is in a tensioned state and respectively connected with the mounting seat and the vehicle body of the vehicle.

11. A vehicle, comprising the vehicle emblem raising and retracting device according to any one of claims 1 to 10.
